(19) Europäisches Patentamt
European Patent Office
Office européen des brevets

(11) **EP 2 477 813 B1**

(12) **EUROPEAN PATENT SPECIFICATION**

(45) Date of publication and mention
of the grant of the patent:
**08.07.2015 Bulletin 2015/28**

(21) Application number: **10759836.9**

(22) Date of filing: **14.09.2010**

(51) Int Cl.:
*B32B 27/08* (2006.01)    *B32B 27/30* (2006.01)
*B32B 27/32* (2006.01)    *B65D 65/40* (2006.01)

(86) International application number:
**PCT/EP2010/063442**

(87) International publication number:
**WO 2011/029950 (17.03.2011 Gazette 2011/11)**

(54) **Gas barrier heat-shrinkable film**

Gasbarrierenschrumpffolie

Film thermorétrécissable à barrière contre les gaz

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **14.09.2009 EP 09011727
29.01.2010 EP 10000917**

(43) Date of publication of application:
**25.07.2012 Bulletin 2012/30**

(73) Proprietor: **Cryovac, Inc.
Duncan, South Carolina 29334 (US)**

(72) Inventors:
• **RICCIO, Marina
I-20152 Milan (IT)**

• **FORLONI, Roberto
I-20107 Rho (Milan) (IT)**
• **URSINO, Felice
I-20107 Rho (Milan) (IT)**

(74) Representative: **Fraire, Cristina et al
PGA S.r.l.
Via Mascheroni, 31
20145 Milano (IT)**

(56) References cited:
**EP-A1- 1 563 990     WO-A1-00/37253
WO-A1-96/18501**

**Description**

**Technical Field**

The present invention refers to a coextruded annealed gas-barrier multilayer heat-shrinkable thermoplastic film having shrink properties particularly suitable for its application in the manufacture of flowpack packages on horizontal form-fill-seal machines or as a lidding film for thermoplastic containers.

**Background Art**

Multilayer, heat-shrinkable thermoplastic films are being used for packaging various food and non food products because they protect the items themselves from the environment during storage and distribution. Said films typically need to combine a number of different properties in order to be fit-for-use in the desired packaging applications.

For packaging of food products it is often necessary that the film has oxygen barrier characteristics to delay or avoid product oxidation or degradation during its shelf-life. Also for the packaging of non food products it may be sometimes desirable or necessary to prevent as much as possible contact of the packaged products with conventional atmosphere, and in such a case a gas-barrier heat-shrinkable film is employed. Several different materials have been used to decrease the oxygen permeability of thermoplastic films. Among these materials a very good gas barrier material is EVOH (ethylene/vinyl alcohol copolymer) and several gas-barrier thermoplastic films comprising an EVOH layer are thus described in the patent literature.

Good heat sealability is also required as it is essential, particularly for gas-barrier films used in applications where the contained product is to be kept either under vacuum or under a modified atmosphere, that the seals that close the package have adequate strength and, as a consequence thereof, that hermeticity of the package is maintained. For certain applications such as for instance the flowpack applications, the film should be heat-sealable to itself. In said applications in fact there is generally a film web that runs from a reel through a former which creates a tube where the products are inserted at a suitable distance one from the other and typically gas-flushed, and a sealing system that provides for a longitudinal seal to set the tube and for transverse seals at the beginning and at the end of each package.

For other applications, such as for instance tray lidding applications, the film should be sealable to the edges of the lower support, typically tray-shaped, or to a film which in its turn will be sealed to the edges of the lower support, and therefore the composition of the layer that will be employed as the sealant layer will be suitably selected depending on the composition of the layer to which it shall be sealed.

The heat-shrinkability of the film is in general an appreciated feature as in line of principle it should allow to get a tight and appealing package where the excess of packaging material or any looseness therein may disappear due to the shrinkage of the material itself. The heat-shrinkability is imparted to the film by solid-state orientation or stretching of the film, either mono-axially or bi-axially, during film manufacture. In a typical process, the thick structure which is extruded through either a round or a flat extrusion die is quickly quenched, then it is heated to a suitable temperature, called the orientation temperature, which is higher than the glass transition temperature (Tg) of the resins used in the film itself but lower than the melting temperature (Tm) of at least one of said resins, and stretched in either or both of the machine (longitudinal) and transverse directions. Upon exposure of the thus obtained film to heat such a feature will allow the film to shrink or, if restrained, to create shrink tension.

In some cases however the shrink properties of the solid-state oriented films should be carefully controlled to avoid that the shrinking step might damage or even crush the package. In particular for packaging articles that are sensitive to, or whose package appearance suffers from effects, such as distortion, of a film with too high a shrink tension, films known in the packaging art as "soft shrink" films have been developed. Typically these solid state oriented films offer relatively high free shrink combined with a relatively low shrink tension. Historically they have been developed for the packaging of paper articles, items not requiring gas-barrier packaging materials but items easily curled and distorted by a too high shrink tension. PVC and other polyolefin packaging materials have been originally developed for soft shrink end use.

However also for certain packaging applications where gas-barrier films are required a soft shrink film would be needed.

Examples of these packaging applications are the flowpack and the tray lidding ones. In the flowpack packaging process the product which is packaged is in fact often positioned within a tray, generally a solid mono-material tray of a very limited thickness that can be easily deformed when wrapped up in a gas-barrier film with a too high shrink force in the transverse direction. Also in tray lidding applications a gas-barrier film with a reduced shrink force at least in the transverse direction, but still a high free shrink, would be preferred as it will provide a tight package without giving deformation of the tray or a too high stress on the seal.

Films suitable for these applications besides a high free shrink at the temperature selected for the shrinking step and a controlled maximum shrink force, need to have also a moderate residual shrink force particularly at room temperature or when kept under cold conditions. This would prevent package relaxation and maintain the tight appearance without distortion.

EP1563990 relates to heat shrinkable, gas-barrier multilayer films, comprising an inner layer comprising propylene-ethylene- (C4-C8)-$\alpha$-olefin terpolymers manufactured according to the trapped bubble process. These films, are not subjected to any additional final heat treatment or annealing step, but are simply quickly cooled, generally at room temperature, after having been oriented.

EP797507 describes a soft shrink gas-barrier film and a method for the manufacture thereof. The film there described has a core gas-barrier layer comprising EVOH, outer layers of blends of EVA with ethylene-$\alpha$-olefin copolymers, two intermediate adhesive layers and is characterized by a free shrink of at least 40 % in both directions at 120 °C and a maximum shrink force in the transverse direction not higher than 0.5 N/cm. The method used to get such a reduced shrink force was via annealing of the conventionally coextruded film. The shrink force of the end film depended on the annealing conditions, wherein a higher temperature annealing gave a film with a more reduced shrink force. In the examples reported in Table II of EP-797,507 the lowest value reported for the shrink force In the transverse direction was 0.36 N/cm and the corresponding film was obtained by carrying out the annealing step under very high temperature conditions (i.e., 100 °C for the first annealing rolls) that might create a number of processablifty problems (sticking of the film to the rolls, sticking of the two superposed webs of the flattened tubing, etc.).

WO0037253 describes higly bi-axially oriented, heat shrinkable, gas-barrier, multilayer films, manufactured by simultaneous orientation of the flat sheet, characterized by high free shrink values, well balanced in the two directions. No intermediate layer, comprising copolymers of propylene with butene and optionally also with ethylene, is either described or suggested.

To cope with the general trend to reduce the amount of packaging materials to be disposed of after use, the containers (e.g., trays or more generally supports) in food packaging become thinner and thinner and consequently their mechanical properties, including their resistance to deformation, worse and worse. With such downgauged containers a transverse shrink force of the wrapping or lidding film of 0.5 N/cm would definitely not be sufficient to prevent deformation of the container.

There is a need therefore for a gas-barrier film that has good heat-sealability properties and good free shrink properties but that will shrink with a shrink force lower than that of the known soft shrink films.

In particular there is a need for a gas-barrier film endowed with good heat-sealability properties, and characterized by a high free shrink, typically higher than at least 15 %, preferably higher than 20 %, at temperatures in the range between 105 and 130 °C (i.e., the temperatures typically reached by the environment in the flowpack and in the tray-lidding processes) and a maximum shrink force in the transverse direction over the entire shrink temperature range $\leq$ 0.35 N/cm. More preferably said maximum shrink force in the transverse direction should be $\leq$ 0.34 N/cm, and even more preferably $\leq$ 0.33 N/cm.

Preferably such a film should also have a moderate residual shrink force in TD (i.e., a shrink force in TD that is exerted by the film at room temperature following the primary shrinkage during packaging) to prevent package relaxation. On the other hand a too high TD residual shrink force value could be detrimental for the final appearance of the package in terms of transversal tray distortion. Preferably such a residual shrink force in TD should not be less than 0.08 N/cm but not higher than 0.30 N/cm, more preferably comprised between 0.10 N/cm and 0.28 N/cm and most preferably comprised between 0.11 and 0.22 N/cm.

A film with these properties would be highly appreciated for use in said packaging processes as it would provide the package with an appealing, tight, appearance without distorting the packaged article or the packaging container to which it is sealed.

It has now been found and this is the gist of the present invention that it is possible to obtain films with these properties by introducing in a structure comprising a core EVOH gas-barrier layer and two polyolefin outer layers, at least one inner layer of a copolymer of propylene with butene and optionally also with ethylene.

The "soft shrink" films of the present invention can be obtained by coextrusion and solid-state orientation followed by annealing at temperatures well below the temperatures used for annealing prior art films, i.e. well below 100 °C, films which comprise a core EVOH gas-barrier layer and two polyolefin outer layers but which are devoided of said at least one propylene copolymer layer as inner layer with considerable advantages in terms of processing.

## Disclosure of Invention

In one aspect, the present invention is directed to a coextruded annealed heat-shrinkable packaging film comprising a core layer (A) comprising an ethylene/vinyl alcohol copolymer, a first outer polyolefin layer (B), a second outer polyolefin layer (C), and at least one inner layer (D) of a copolymer of propylene with butene and optionally also with ethylene, said film being characterized by a maximum shrink force in the transverse direction $\leq$ 0.35 N/cm and by a % free shrink at 120°C of at least 20% in at least one direction.

In a second aspect the present invention is directed to a process for the manufacture of said film which process comprises coextruding the resins or the blends of resins of the various layers through a coextrusion die, quenching the primary tape thus obtained, re-heating it at the solid state orientation temperature comprised between 110 and 125°C, stretching it either mono-axially or bi-axially, submitting the oriented film to a heat treatment at a temperature of from 70 to 90 °C for a time of at least 0.5 and not more than 5 s sufficient to induce a decrease of its maximum shrink force in the transverse direction to a value not exceeding 0.35 N/cm, and finally cooling the annealed film down to room temperature.

In a third aspect the present invention is directed to a flowpack or tray lidding packaging process where the packaging film of the first aspect is employed.

In a fourth aspect the present invention is directed to a flowpack package or to a tray lidded package comprising the packaging film of the first aspect.

DEFINITIONS

As used herein the phrases "inner layer" and "internal layer" refer to any film layer having both of its principal surfaces directly adhered to another layer of the film.

As used herein, the phrase "outer layer" refers to any film layer having only one of its principal surfaces directly adhered to another layer of the film.

As used herein, the phrases "seal layer", "sealing layer", "heat seal layer", and "sealant layer", refer to the film outer layer which will be involved in the sealing of the film either to itself or to another film or sheet to close the package and that will thus be in contact with, or closer to, the packaged product.

As used herein, the phrase "adhesive layer" or "tie layer" refers to any inner film layer having the primary purpose of adhering two layers to one another.

As used herein, the phrases "longitudinal direction" and "machine direction", herein abbreviated "MD", refer to a direction "along the length" of the film, i.e., in the direction of the film as the film is formed during coextrusion.

As used herein, the phrase "transverse direction", herein abbreviated "TD", refers to a direction across the film, perpendicular to the machine or longitudinal direction.

As used herein, the term "solid state orientation" refers to the process of stretching of the cast film carried out at a temperature higher than the Tg (glass transition temperatures) of all the resins making up the layers of the structure and lower than the temperature at which all the layers of the structure are in the molten state.

The solid state orientation may be mono-axial, transversal or, preferably, longitudinal, or, preferably, bi-axial.

As used herein the phrases "heat-shrinkable," "heat-shrink," and the like, refer to the tendency of the solid-state oriented film to shrink upon the application of heat, i.e., to contract upon being heated, such that the size of the film decreases while the film is in an unrestrained state. As used herein said term refer to solid-state oriented films with a free shrink in at least one of the machine and the transverse directions, as measured by ASTM D 2732, of at least 10 %, preferably at least 15% at 120 °C.

As used herein the term "annealing" refers to a heat-treatment process aiming at the partial or complete removal of strains and stresses set up in the material during its forming and fabricating operations.

As used herein, the term "homo-polymer" is used with reference to a polymer resulting from the polymerization of a single monomer, i.e., a polymer consisting essentially of a single type of mer, i.e., repeating unit.

As used herein, the term "co-polymer" refers to polymers formed by the polymerization reaction of at least two different monomers. When used in generic terms the term "co-polymer" is also inclusive of, for example, ter-polymers. The term "co-polymer" is also inclusive of random co-polymers, block co-polymers, and graft co-polymers.

As used herein, the terms "(co)polymer" and "polymer" are inclusive of homo-polymers and co-polymers.

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts.

As used herein, the phrase "homogeneous polymer" refers to polymerization reaction products of relatively narrow molecular weight distribution and relatively narrow composition distribution. This term includes those homogeneous polymers prepared using metallocene, or other single-site type catalysts.

As used herein, the term "polyolefin" refers to any polymerized olefin, which can be linear, branched, cyclic, aliphatic, aromatic, substituted, or unsubstituted, including "modified polyolefin".

More specifically, included in the term polyolefin are homo-polymers of olefin, co-polymers of olefin, co-polymers of an olefin and a non-olefinic co-monomer co-polymerizable with the olefin, such as vinyl monomers, modified polymers thereof, and the like. The term "modified polyolefin" is inclusive of modified polymer prepared by co-polymerizing the homo-polymer of the olefin or co-polymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homo-polymer or co-polymer, by blending or preferably by grafting, an unsaturated carboxylic acid, e.g., maleic acid, fumaric acid or the like, or a derivative thereof such as the anhydride, ester or metal salt or the like.

Specific examples include polyethylene homo-polymer, polypropylene homo-polymer, polybutene homo-polymer, ethylene-$\alpha$-olefin co-polymer, propylene-$\alpha$-olefin co-polymer, butene-$\alpha$-olefin co-polymer, ethylene-unsaturated ester co-polymer, ethylene-unsaturated acid co-polymer, (e.g. ethylene-ethyl acrylate co-polymer, ethylene-butyl acrylate co-polymer, ethylene-methyl acrylate co-polymer, ethylene-acrylic acid co-polymer, and ethylene-methacrylic acid co-polymer), ethylene-vinyl acetate copolymer, ionomer resins, polymethylpentene, etc. and the corresponding modified polymers.

As used herein, the term "adhered", as applied to film layers, broadly refers to the adhesion of a first layer to a second layer either with or without an adhesive, a tie layer or any other layer therebetween, and the word "between", as applied to a layer expressed as being between two other specified layers, includes both direct adherence of the subject layer to the two other layers it is between, as well as a lack of direct adherence to either or both of the two other layers the subject layer is between, i.e., one or more additional layers can be imposed between the subject layer and one or more of the layers the subject layer is between.

In contrast, as used herein, the phrase "directly adhered" is defined as adhesion of the subject layer to the object layer, without a tie layer, adhesive, or other layer therebetween.

When referred to an overall structure, the term "gas-barrier" is used herein to identify structures characterized by an Oxygen Transmission Rate (evaluated at 23°C and 0 % R.H. according to ASTM D-3985) of less than 100 $cm^3/m^2$.day.bar.

As used herein the terms "EVOH layer", "polyolefin layer", or "propylene copolymer layer" as well as the wording "layer of EVOH", "layer of polyolefin" or "layer of propylene copolymer" refer to layers comprising a major proportion, i.e., > 50 wt. %, such as > 60 wt.%, > 70 wt.%, > 80 wt.%, > 90 wt.%, > 95 wt. %, up to about 100 wt.%, of one or more of the corresponding resins, i.e., one or more EVOH resins, one or more polyolefins, or one or more propylene copolymers respectively, calculated on the overall weight of the layer considered.

## DETAILED DESCRIPTION OF THE INVENTION

The film of the present invention comprises an EVOH core gas-barrier layer (A), a first outer polyolefin layer (B) a second outer polyolefin layer (C), and at least one inner layer (D) of a copolymer of propylene with butene and optionally also with ethylene.

For the gas-barrier layer (A) a single EVOH or a blend of two or more EVOH resins can be employed as well as a blend of one or more EVOH resins with one or more polyamides. In this case, suitable polyamides are those commonly indicated as nylon 6, nylon 66, nylon 6/66, nylon 12, nylon 6,12, and the like, wherein a preferred polyamide is nylon 6/12, a copolymer of caprolactam with laurolactam with a low melting temperature, such as GrilonÔ CF 6S or GrilonÔ W8361 manufactured and marked by EMS. Generally, if a high oxygen barrier is needed, the amount of polyamide, if any, blended with EVOH will not be higher than 20% by weight of the overall weight of the blend, preferably not higher than 15 %, and even more preferably not higher than 10 %.

The thickness of the barrier layer can vary, depending in part on the overall thickness of the film and on its use, between 2 and 6 mm. A preferred thickness is between 2.1 and 5 mm, and more preferably it is comprised between 2.2 and 4 mm.

The film has a first outer polyolefin layer (B) and a second outer polyolefin layer (C). Alternatively these outer layers may be indicated as an outer heat-sealable layer (B) and an outer abuse-resistant layer (C). This is done just to distinguish between the two outer surfaces of the end structure, even if not necessarily the two layers have a different composition and even if they might both be involved in a seal (e.g., if in the flowpack process the longitudinal seal is a lap seal where the polyolefin outer layer (B) is sealed to the polyolefin outer layer (C)), simply because in most of the applications only one of the film outer polyolefin layers will be involved in a seal while the other outer layer will be the outer surface of the end package and - as such - more subject to "abuse". For the sake of clarity however the term "abuse resistant" does not imply any particular behaviour or any particular composition for the outer layer (C).

Each of these outer layers may comprise one or more polyolefins.

Preferred polyolefins for the heat-sealable layer (B) will be ethylene homopolymers, ethylene co-polymers, propylene homopolymers, propylene co-polymers and blends thereof.

Ethylene homo- and co-polymers particularly suitable for the heat-sealable layer (B) are selected from the group consisting of ethylene homo-polymers (polyethylene), heterogeneous or homogeneous ethylene-$\alpha$-olefin copolymers, ethylene-cyclic olefin copolymers, such as ethylene-norbornene copolymers, ethylene-vinyl acetate co-polymers, ethylene-$(C_1-C_4)$ alkyl acrylate or methacrylate co-polymers, such as ethylene-ethyl acrylate co- polymers, ethylene-butyl acrylate co-polymers, ethylene-methyl acrylate co-polymers, and ethylene-methyl methacrylate co-polymers, ethylene-acrylic acid co-polymers, ethylene-methacrylic acid co-polymers, ionomers, and blends thereof in any proportion.

Propylene polymers suitable for said outer heat-sealable polyolefin outer layer (B) are selected from the group consisting of propylene homo-polymer and propylene co- and ter-polymers with ethylene and/or a $(C_4-C_{10})$-$\alpha$-olefin, and

more preferably from the group consisting of polypropylene, propylene-ethylene co-polymers, propylene-ethylene-butene co-polymers, propylene-butene-ethylene copolymers and blends thereof in any proportion.

Said outer heat-sealable polyolefin layer (B) may also comprise a blend of a major proportion of one or more polymers of the group of ethylene homo-and copolymers and propylene homo- and co-polymers, with a minor proportion of one or more other polyolefins and/or modified polyolefins, such as polybutene homo-polymers, butene-($C_5$-$C_{10}$)-$\alpha$-olefin copolymers, anhydride grafted ethylene-$\alpha$-olefin copolymers, anhydride grafted ethylene-vinyl acetate copolymers, rubber modified ethylene-vinyl acetate copolymers, ethylene/propylene/diene (EPDM) copolymers, and the like.

The composition of said outer layer (B) will mainly depend on the final application foreseen for the end structure. For instance when the film according to the present invention is used for flowpack applications where it will be sealed to itself, typically the composition of the outer layer (B) will be based on ethylene polymers as these resins typically have a lower seal initiation temperature and can be sealed more easily to themselves. On the other hand if the film is used in tray lidding applications and the container to which it has to be sealed is of polypropylene, the outer heat-sealable layer (B) will preferably be of a propylene polymer.

The second outer layer (C) may have the same composition of the outer heat-sealable layer (B), or it may have a different polyolefin composition. In this latter case preferred polyolefins for the second outer layer (C) are ethylene homopolymers, such as MDPE and HDPE, ethylene-$\alpha$-olefin copolymers, particularly those with a density of from about 0.895 to about 0.935 g/m$^3$, and more preferably of from about 0.900 to about 0.930 g/cm$^3$, ethylene-vinyl acetate copolymers, particularly those with a vinyl acetate content of from about 4 to about 14 % by weight, ionomers, polypropylene homopolymers, propylene-ethylene co-polymers, propylene-ethylene-butene copolymers, propylene-butene-ethylene copolymers, and their blends.

The thickness of the outer heat-sealable layer (B) can be up to about 40 % of the overall thickness of the structure, preferably up to about 35 % and more preferably up to about 30 %. Preferably its thickness is higher than about 8 %, and more preferably higher than about 10 % of the overall thickness of the film or sheet, e.g., typically comprised between about 12 and about 30 %.

The thickness of the outer abuse resistant polyolefin layer (C) may be in the same range as indicated for the heat-sealable outer layer (B). In a preferred embodiment, particularly when the sequence of layers in the film of the invention is palindromic, the thickness of the two outer layers is the same.

The film will comprise an inner layer (D) of a copolymer of propylene with butene and optionally also with ethylene, indicated in the following as the " propylene copolymer".

In the propylene copolymer of layer (D) propylene will be the comonomer present in the major proportion. It will preferably be present in an amount by weight of at least 60 %, at least 65 %, at least 70 %, at least 75 %, or at least 80 %.

The total amount of comonomers (butene or butene plus ethylene) will be preferably comprised between about 4 % by weight and about 20 %, 22 %, 24 %, 26 %, 28 %, 30 %, 32 %, 34 %, 36 %, 38 %, or 40 %. Preferred total amounts by weight of the comonomers will be at least 5 %, at least 8 %, at least 10 %, at least 12 %, at least 14 %, at least 16 % or at least 18 %.Suitable copolymers of propylene with butene will comprise from about 4 to about 20 % by weight of butene, typically from about 4 to about 14 % by weight of butene-1. Examples of propylene copolymers with butene and ethylene will contain for instance from 0.5 to 5 % by weight of ethylene and from 2.5 to 10 % by weight of butene, or from 2 to 5 % by weight of ethylene and from 6 to 12 % by weight of butene, or from 2 to 10 % by weight of ethylene and from 2 to 10 % by weight of butene. The propylene copolymers of layer (D) can be obtained by using either titanium-based catalyst systems (Ziegler-Natta systems) or metallocene-based catalyst systems, wherein these latter are however preferred. Preferably the molecular weight distribution, Mw/Mn, in the propylene copolymers of layer (D) will be lower than 4, and more preferably lower than 3.5.

In one embodiment layer (D) only comprises one or more propylene copolymers as indicated above. In another embodiment the propylene copolymer amounts to at least about 60 %, preferably at least 70 %, more preferably at between 80 and 90 %, still more preferably at about 85% by weight of layer (D) while the complement to 100 % is an ethylene copolymer. Preferably in such a case the ethylene copolymer is an ethylene-$\alpha$-olefin copolymer with a density below 0.915 g/cm$^3$, typically a single-site ethylene-$\alpha$-olefin copolymer with a density comprised between 0.895 and 0.910 g/cm$^3$. In another alternative preferred embodiment the propylene copolymer of layer (D) will be blended with a modified polyolefin, to provide for an improved bond of said layer (D) to the adjacent layers in the structure, and in particular to improve the bond with the core layer (A), should said two layers be directly adhered one to the other.

The film of the present invention may comprise one single layer (D) or two (D) layers positioned on either sides of the core EVOH layer (A), i.e., one between core layer (A) and heat-sealable layer (B) and the other between core layer (A) and the abuse resistant layer (C).

The thickness of the single layer (D) or the total thickness of the two layers (D), should there be two of such layers, will typically be comprised between about 8 and about 40 % of the overall thickness of the film, preferably up to about 35 %, e.g., up to about 30 %. Typically it will be comprised between about 10 and about 30 % of the overall thickness of the film and more preferably between about 15 and about 25 %.

The film of the present invention will preferably comprise one or two tie or adhesive layers (E) directly adhered to one or both surfaces of the core EVOH (A) layer. These adhesive layers may have the same or a different composition and will comprise one or more modified polyolefins as indicated above possibly blended with one or more polyolefins. Also the thickness of the adhesive layers may vary depending on the overall film thickness and on the type of resin employed. In general, however suitable adhesive layers typically have a thickness of from 1 to 4 mm, e.g., 2-3 mm. Additional adhesive layers may be present depending on the specific structure of the film.

Other layers may be present in the overall structure, such as seal assisting layers, and easy-opening layers, directly adhering to the heat-sealable layer (B), or bulk layer, should this be necessary to provide the film with the desired thickness.

The overall thickness of the film can vary depending on the end use thereof typically from about 16 to about 35 mm, and preferably from about 17 to about 30 mm, generally around 18, 20, 22, 24, 26, or 28 mm.

In one embodiment of the invention the film has 7 layers, with anyone of the following two sequences :(B)/(D)/(E)/(A)/(E)/(D)/(C) and (B)/(E)/(A)/(E)/(D)/(E)/(C). In a most preferred embodiment of the former sequence the film is palindromic and the composition of the outer layers (B) and (C) is identical as well as that of the adhesive layers (E). In the latter asymmetrical sequence the composition of the outer layers (B) and (C) may be equal or different.

In another embodiment of the invention the film has 8 layers with the following sequence (B)/(D)/(E)/(A)/(E)/(D)/(E)/(C) or (B)/(E)/(D)/(E)/(A)/(E)/(D)/(C). When the composition of the outer layers (B) and (C) is equal the two sequences coincide.

In still another embodiment the film has 9 layers with the following sequence: (B)/(E)/(D)/(E)/(A)/(E)/(D)/(E)/(C) and in a most preferred aspect of this embodiment the film is symmetrical and the composition of the outer layers (B) and (C) is identical as well as that of the tie layers (E).

Any of the film layers, and in particular any of the outer layers and/or the layers directly adhered thereto, may contain additives, such as those conventional additives that are used in small amounts to improve resin processability or the properties of the end film. Examples of said additives are antioxidant agents, slip and anti-block agents, UV absorbers, antimicrobial agents, pigments, anti-fog agents or compositions, cross-linking agents or cross-link inhibitors, oxygen scavenging agents or compositions, etc.

The films according to the present invention are obtained by coextrusion of the resins and/or blends of resins of the various layers through a round or flat extrusion die, quickly followed by quenching at room temperature. The thus obtained thick tube or sheet is then preferably cross-linked by irradiation with high energy electrons at a suitable dosage level comprised between 10 and 120 kGrays, and preferably between 20 and 90 kGrays, heated to the orientation temperature, generally comprised between about 110 °C and about 125 °C, by passing it through a hot air tunnel or an IR oven and then stretched mono- or bi-axially. When a round extrusion die is employed, stretching is generally carried out by the trapped bubble technique. In this technique the inner pressure of a gas such as air is used to expand the diameter of the thick tubing obtained from the extrusion to give a larger bubble transversely stretched, and the differential speed of the nip rolls that hold the bubble is used to get the longitudinal stretching. Generally the stretching ratio is of at least 3:1 in each direction. Alternatively, when a flat die is used in the extrusion step, orientation is carried out by means of a simultaneous tenter frame.

Control of the film shrink force is then obtained by subjecting the film obtained by the above general method to a heat treatment under strictly controlled conditions (annealing). In particular such a heat treatment involves heating the film to a temperature comprised between 70 and 90 ° C, typically comprised between 75 and 85 °C for a time at least sufficient to induce a decrease of the maximum transverse shrink force of the film to a value not exceeding 0.35 N/cm, but not long enough to substantially affect the film % free shrink at 120°C, and then cool it down to room temperature or below

The heat treatment according to the present invention might be carried out off-line, but preferably it is performed right on the line of all other processing operations, and any annealing technique known in the art may be employed suitably choosing the temperature in the above range and setting the annealing time to meet the above objective.

In particular such a heat treatment may be part of the overall process or be a step added thereto.

In the former case the annealing may be obtained, for instance, by using the "triple bubble" technology. In the triple bubble technology first a bubble is extruded downward into a water quench, then the tube is reheated and inflated in an orienting station ("second bubble") and finally it goes to an annealing station ("third bubble").

In the latter case, before being wound up, the film obtained from the solid state orientation step, either as a flattened tubular film or as a mono-ply film, is conveyed to a conventional annealing station and heated to the suitably selected temperature.

As the thermal capacity of the films according to the present invention is such that they rapidly attain the temperature of the environment, for the purpose of the present invention, the heat treatment temperature is defined as the temperature of the heated elements with which the film is contacted or the ambient temperature to which the film is exposed during the treatment. In practice the film may be heated to the suitably selected annealing temperature by conventional techniques, such as, by exposure of the film to radiant elements, by passage of the film through a heated air oven or an IR oven, or by contact of the film with the surface of one or more heated plates or rollers.

According to a preferred embodiment in this case, the heat treatment may be carried out by first running the film over and in contact with the surface of a number, e.g., 2 to 8, preferably 4 or 6, of revolving rollers heated at the suitably selected temperature, and then over and in contact with the surface of few other, e.g., 2 to 4, rollers cooled to a temperature below room temperature.

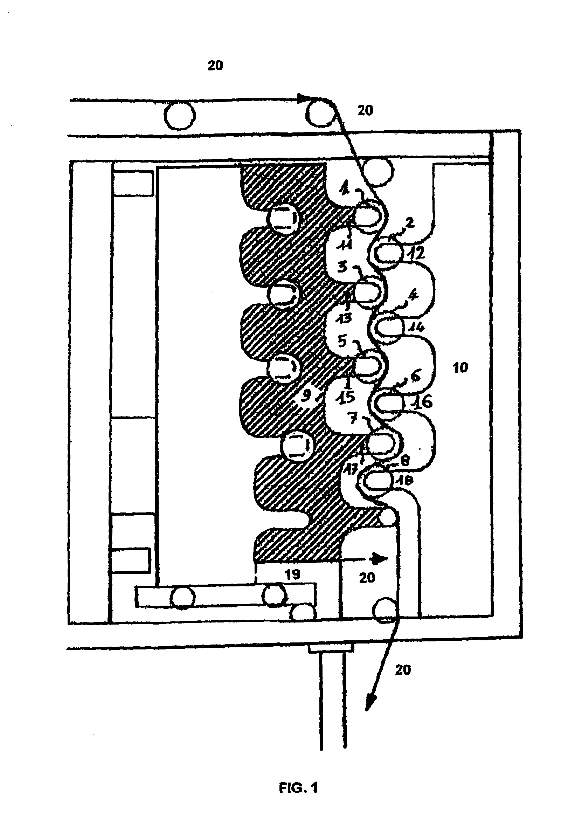

The rollers are typically disposed - as illustrated in Figure 1- on two vertical rows, whereas rollers (1), (3), (5), and (7) are mounted on a support member (9) by means of supporting bars (11), (13), (15) and (17) and rollers (2), (4), (6), and (8) are mounted on a similar support member (10) by means of supporting bars (12), (14), (16) and (18). While support (10) is fixed, support member (9), and rollers (1), (3), (5), and (7) jointly thereto, can be moved along the axis (19) to approach support member (9). On each support member the distance between two subsequent rollers is larger than the rollers' diameter and the rollers mounted on one support member are shifted with respect to those mounted on the other support member so that by reducing the distance between the two support members the row of rollers (1), (3), (5), and (7) can come closer, align, or even go beyond that of rollers (2), (4), (6), and (8).

The film (20) is driven through this unit at a speed which generally corresponds to the speed of the production line. Lower speeds may be envisaged but economic considerations would discourage this possibility. The contact time of the film with the heating and cooling rollers, and therefore the length of the heating time and that of the cooling time will depend on the rollers diameters, on the speed of the line, and on the distance between the two rows of rollers. As a matter of fact, for a given line speed and roller diameter, the closer the two rows the longer is the contact time. The dimensions of the rollers can be widely varied in diameter while their length is determined by the width of the film which has to be subjected to the heat-treatment. Typically, to avoid heat dispersion on the rollers' sides and therefore an unsuccessful heat-treatment on the film edges, the roller length will be larger than the film width. The rollers' diameter typically ranges from 10 to 100 cm, and generally is comprised between 10 and 40 cm. The rollers are typically made of stainless steel, but any material which is highly heat conductive and heat-resistant and which the thermoplastic material does not stick to could in theory be employed. The heating or cooling system may be provided e.g. by the use of internal spirals where a heated or cooled medium is circulated. The heating temperature is typically comprised between 70 and 90 °C and preferably between 75 and 85 °C. As indicated above, in order to get the films according to the present invention, the period for which the film is maintained at the heating treatment temperature must be very short and in most of the cases it should not exceed 7.5 s. An extended period at the heat treatment temperature would in fact be detrimental to the film characteristics, unacceptably decreasing the free shrink of the film at 120 ° C. Typically a period of time of at least 0.5 and preferably at least 1 s and not more than 5, preferably not more than 3 s, is employed. The cooling step that immediately follows the heat treatment, is then carried out as quickly as possible. Generally the temperature of the film needs to be brought to a value below room temperature in less than 2 s, preferably in less than 1 s. While the temperature of the cooling rollers could be as low as possible, using appropriate fluids with a freezing point below 0 °C, it is generally preferred, in order to avoid condensation on the roller, cooling the rollers to a temperature of between 1 and 25 °C preferably between 8 and 20 °C.

It is however possible for the person with an ordinary skill in this art to easily adjust the optimum heating and cooling temperatures and the contact times, in relation with the configuration of the heat treating unit and of the process (e.g., the number of rollers, their distance, their diameter, the line speed, whether the film is passed through the unit in the form of a flattened tube or of a monoply film, etc.) and film characteristics (film thickness, film composition, shrink force of the starting film, etc.), within the above indicated ranges, by trial and error.

During the above heat treatment the film generally does not need to be constrained against shrinkage. Using in fact the preferred system for carrying out the heat treatment wherein the film web is almost tensioned by the process itself on its passing through the system of rollers at a relatively high speed, a tolerable reduction in the film width occurs, generally of not more than 15-20%, which reflects in a slight thickening of the film. However all these variations can be calculated depending on the temperature of the heat-treatment and the speed of the line and taken into account at the extrusion and orientation of the starting film so that a film having the required width and thickness is obtained after the heat-treatment.

Sometimes, and mainly when the heat treatment is carried out by passing the film through a heated oven, it is also possible to avoid film shrinkage during the treatment by maintaining the film at substantially constant linear dimensions e.g., by a series of moving pinches holding the film edges, or by using a frame of the suitable dimensions.

The annealed films obtained by any of the above described processes may then be subjected to conventional after treatments-for example exposure to a corona discharge treatment to improve the bonding and print-receptive characteristics of the film surface

The presence of at least one propylene copolymer layer as inner layer (D) allows to obtain films that upon annealing at very mild conditions maintain a high free shrink at 120 °C, such as a free shrink of at least 20 %, at least 25 %, at least 30 %, at least 35 %, at least 40 %, at least 45 %, or at least 50 %, in at least one direction, but show a maximum TD shrink force below 0.35 N/cm, preferably below 0.34 N/cm, and even more preferably below 0.33 N/cm, and a residual TD shrink force not less than 0.08 N/cm but not higher than 0.30 N/cm, more preferably comprised between 0.10 N/cm and 0.28 N/cm and most preferably comprised between 0.11 and 0.22 N/cm.

The following examples are presented for the purpose of further illustrating and explaining the present invention and are not to be taken as limiting in any regard. Unless otherwise indicated, all parts and percentages are by weight.

In the following examples the resins indicated in Table 1 below have been employed, wherein density is measured by ASTM D 792, the melting points, if not other wise indicated, are determined by DSC analysis following ASTM D 3418 (2nd heating - 10 °C/min), and the Melt Flow indexes are measured according to ASTM D-1238, at 190 °C/2.16 kg for the ethylene polymers and at 230°C/2.16 kg for the propylene polymers, and are reported as grams/10 minutes.

**Table 1**

| EC1 | Homogeneous ethylene-hexene copolymer with d = 0.918 g/cm$^3$ and MI = 2 g/10 min - Exceed 2018CA by ExxonMobil |
|---|---|
| EC2 | Heterogeneous ethylene-octene copolymer with d = 0.920 g/cm$^3$ and MI |
|  | = 1 g/10 min - Dowlex 2045S by Dow |
| EC3 | Homogeneous ethylene-octene copolymer with d = 0.902 g/cm$^3$ and MI = 1 g/10 min - Affinity PL1880 by Dow |
| EC4 | Homogeneous ethylene-octene copolymer with d = 0.92 g/cm$^3$ - F5841 LL by Tosaf |
| PC1 | Propylene-ethylene-butene copolymer with m.p. 131 °C, and MI = 5 g/10 min (at 230°C and 2.16 kg) - Eltex® P KS399 by Ineos Polyolefins |
| PC2 | Random propylene-butene copolymer with m.p. 145 °C, and MI = 5 g/10 min (at 230°C and 2.16 kg) - Eltex® P KS607 by Ineos Polyolefins |
| PC3 | Propylene-butene copolymer with m.p. 141 °C - Borsoft SD233CF by Borealis |
| PA | PA 6/12 - m.p. 130°C - Grilon CF6S by EMS |
| EVOH1 | Ethylene-vinyl alcohol copolymer with > 40 % ethylene by Nippon Goshei |
| EVOH2 | Ethylene-vinyl alcohol copolymer with 44 % ethylene - Soarnol AT4403 by Nippon Goshei |
| AD1 | Maleic anhydride modified linear polyethylene - Admer AT2146E by Mitsui |
| MB1 | Masterbatch based on EC2 containing 0.7 % silica and 6 % of an antifog composition containing glycerol fatty acid esters and ethoxylated fatty alcohol |
| MB2 | Masterbatch based on EC3 containing 0.7 % silica and 6 % of an antifog composition containing glycerol fatty acid esters and ethoxylated fatty alcohol |
| MB3 | Masterbatch based on EC2 containing fatty acid esters and 1.5 % silica |
| MB4 | Masterbatch based on EC2 containing fatty acid esters and 2.5 % silica |
| MB5 | Masterbatch based on EC4 containing fatty acid esters and 2% silica |

The Examples that follow are aimed at better illustrating some representative embodiments of the present invention.

In order to evaluate the films according to the present invention the following tests have been used:

- % unrestrained free shrink: the % free shrink, i.e., the irreversible and rapid reduction, as a percent, of the original dimensions of a sample subjected to a given temperature under conditions where nil restraint to inhibit shrinkage is present, was measured according to ASTM method D 2732, by immersing for 5 seconds specimens of the films (100-mm by 100-mm) into a bath of hot oil at 120°C. The % free shrink was measured in both the longitudinal (machine) and transverse directions. The percent free shrink is defined, for each direction, as

$$\text{unrestrained linear shrinkage, \%} = [(L_o - L_f)/L_o] \times 100$$

wherein $L_o$ is the initial length of side and $L_f$ is the length of side after shrinking.

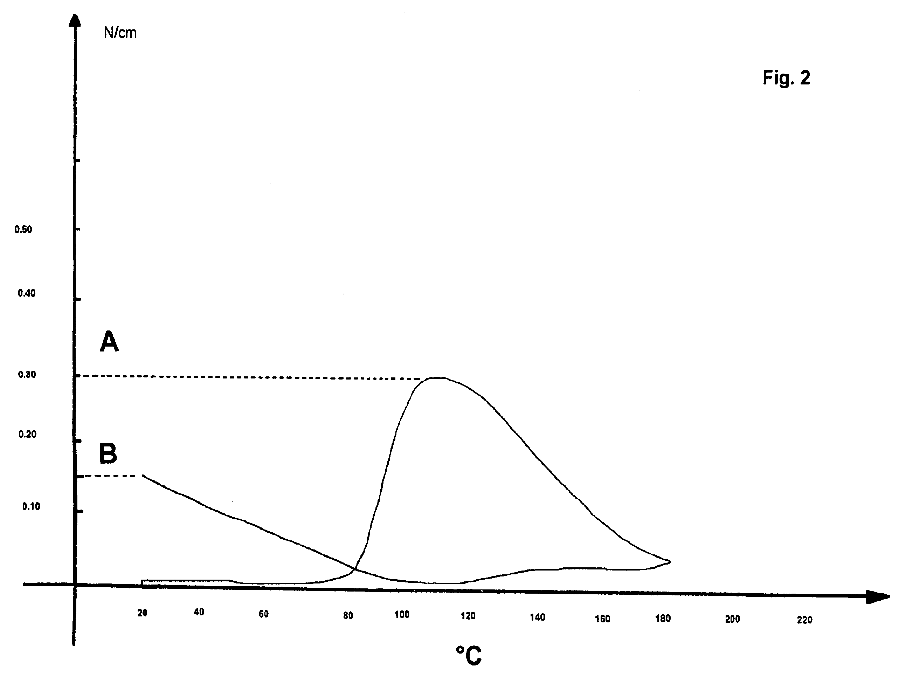

- Shrink force: the shrink force, which is the force released by the materials during the heating/shrinking process. It has been measured by the following internal method: specimens of the films (2.54 cm x 14.0 cm, of which 10 cm are free for testing) are cut in the longitudinal (LD) and transverse (TD) directions and clamped between two jaws, one of which is connected to a load cell. The two jaws keep the specimen in the centre of a channel into which an impeller blows heated air and three thermocouples measure the temperature. The signal supplied by the thermocouples is amplified and sent to an output connected to the " X" axis of a X/Y recorder. The signal supplied by the load cell is amplified and sent to an output connected to the "Y" axis of the X/Y recorder. The impeller starts blowing hot air and the force released by the sample is recorded in grams. The temperature is increased from room temperature to about 180°C at a rate of about 2 °C/second and then decreased again to room temperature by blowing air at room temperature. As the temperature changes the pen draws on the X/Y recorder the measured values of shrink force versus the temperature thus producing a curve of the shrink force (expressed in N) versus temperature. By dividing the values thus recorded by the specimen width (expressed in cm), the shrink force per unit length (in N/cm) is obtained. An example of a TD curve obtained according to the present method is reported in Figure 2, in which A represents the highest value of shrink force per unit length recorded (maximum shrink force or shrink force at peak).

- Residual shrink force: is the maximum tensile force, recorded by the same system described above, once the temperature of the sample of the film returns to room temperature at the end of the heating - cooling cycle (Figure 2, point B).
- Haze: haze is defined as the percentage of transmitted light which is scattered forward while passing through the sample and is measured by ASTM D 1003 (Method A).
- Gloss: the film gloss, i.e. the surface reflectance of a specimen is measured according to ASTM D 2457-90 at a 60 ° angle.
- Elongation at break: a measure of the percent extension required to break a specimen of the film, was evaluated by ASTM D 882.

EXAMPLES 1 to 9

Nine symmetrical structures (B)/(D)/(E)/(A)/(E)/(D)/(C) where (B) and (C) in each structure were identical and of identical thickness, and where also layers (D) as well as layers (E) had the same thickness, were extruded through a round die, quickly quenched, irradiated at about 64 kGrays, biaxially oriented out of hot air at about 116 °C with stretching ratios of about 3.8:1 in both directions, and finally annealed.

The annealing step was carried out on a processing unit as Illustrated in Figure 1 consisting of a sequence of six stainless steel Gross Equatherm heated rollers and two cooled rollers, 16-cm in diameter and 203-cm in length, disposed in such a way that the total heating time for the film passing through and contacting the various heated rollers was about 2 seconds. The temperature was the same in the three heating zones, each comprising two rollers, and corresponds to the temperature indicated in Table 2 below under "annealing temperature", while the temperature in the cooling zone, the last two rollers, was 20 °C.

Table 2 below reports the resins used for the various layers with the partial thickness indicated in parentheses (in mm), the total thickness of the end film (still in mm) and the annealing temperature (in °C).

**Table 2**

| Ex. No. | (B)/(C) | (D) | (E) | (A) | Total thickness | Annealing temp. |
|---------|---------|-----|-----|-----|-----------------|-----------------|
| 1 | 50% EC1 + 50% MB1 (5.0) | PC2 (2.5) | AD1 (2.5) | EVOH1 (2.2) | 22 | 75 |
| 2 | 50% EC1 + 50% MB1 (4.5) | PC1 (2.3) | AD1 (2.3) | EVOH1 (2.2) | 20.4 | 75 |
| 3 | 50% EC11 + 50% MB1 (4.5) | PC1 (2.3) | AD1 (2.3) | EVOH1 (2.2) | 20.4 | 70 |
| 4 | 50% EC1 + 50% MB2 (4.5) | PC1 (2.3) | AD1 (2.3) | EVOH1 (2.2) | 20.4 | 75 |
| 5 | 50% EC1 + 50% MB2 (7) | PC2 (3.6) | AD1 (3.0) | EVOH1 (2.6) | 29.8 | 80 |
| 6 | 50% EC1 + 50% MB1 (4.5) | PC3 (2.3) | AD1 (2.3) | EVOH1 (2.2) | 20.4 | 75 |

(continued)

| Ex. No. | (B)/(C) | (D) | (E) | (A) | Total thickness | Annealing temp. |
|---|---|---|---|---|---|---|
| 7 | 50% EC1 + 50% MB1 (3.5) | PC3 (2.0) | AD1 (2.0) | EVOH1 (2.0) | 17 | 75 |
| 8 | 50% EC1 + 50% MB1 (5.6) | PC1 (3.5) | AD1 (2.5) | EVOH1 (2.8) | 26 | 85 |
| 9 | 50% EC1 + 35% EC2 +15% MB3 (5.3) | PC1 (3.0) | AD1 (2.5) | EVOH1 (2.4) | 24 | 75 |
| 12 | 80% EC1 + 20% MB5 (4.7) | 85% PC1 +15% EC3 (2.4) | AD1 (2.15) | 95% EVOH2 + 5% PA (2.5) | 21.0 | 80 |
| 13 | 80% EC1 + 20% MB5 (4.7) | 85% PC1 +15% EC3 (2.4) | AD1 (2.15) | 95% EVOH2 + 5% PA (2.5) | 21.0 | 75 |
| 14 | 75% EC1 + 25% MB5 (4.7) | 85% PC1 +15% EC3 (2.4) | AD1 (2.15) | 95% EVOH2 + 5% PA (2.5) | 21.0 | 80 |
| 15 | 50% EC1 + 50% MB1 (4.7) (2.4) | 70% PC1 +30% EC3 | AD1 (2.15) | EVOH1 (2.5) | 21.0 | 75 |

EXAMPLE 10

The following structure (B)/(E)/(A)/(E)/(D)/(E)/(C) where (B) and (C) were identical and of the identical thickness was manufactured by the same process described for examples 1 to 9.

This structure had a total thickness of 22 mm and the following resins were employed for the various layers :

    (B)/(C)        : 80 % of EC1 and 20 % of MB4 (4.5 mm)
    (E)        : AD1 (2.1 mm)
    (A)        : 95 % of EVOH2 and 5 % of PA (2.2 mm)
    (D)        :PC1 (3.5 mm)

The annealing temperature was 75 °C.

EXAMPLE 11

The film of this example was obtained by following exactly the same procedure described for Example 10 but increasing the annealing temperature to 80 °C.

EXAMPLES 12-15

The films of these examples have the following symmetrical structures (B)/(D)/(E)/(A)/(E)/(D)/(C), where (B) and (C) were identical and of the identical thickness and (D) layers comprise propylene-butene and ethylene copolymers in the amounts disclosed in Table 2. They were manufactured by the same process described for examples 1 to 9 with an annealing temperature as disclosed in Table 2.

The shrink properties of all the films of the above examples have been reported in following Table 3. When available also the optical and mechanical properties of the films are reported.

Table 3

| Ex. No. | LD/TD % free shrink at 120°C | Maximum TD shrink force (N/cm) | Residual TD shrink force (N/cm) | Haze | Gloss | Elongation at break (% in TD) |
|---|---|---|---|---|---|---|
| 1 | 57/49 | 0.30 | 0.17 | | | |
| 2 | 66/59 | 0.30 | 0.21 | | | |
| 3 | 67/60 | 0.32 | 0.22 | | | |
| 4 | 62/55 | 026 | 0.09 | | | 110 |
| 5 | 61/52 | 0.30 | 0.11 | 6.80 | 97 | 170 |
| 6 | 57/52 | 0.30 | 0.21 | | | |
| 7 | 54/49 | 0.30 | 0.17 | | | |
| 8 | 67/53 | 0.25 | 0.15 | | | |
| 9 | 68/58 | 0.34 | 0.13 | | | |
| 10 | 66/50 | 0.34 | 0.14 | | | 160 |
| 11 | 65/50 | 0.26 | 0.12 | | | 150 |
| 12 | 67/59 | 0.30 | 0.17 | 4.2 | 123 | |
| 13 | 68/54 | 0.30 | 0.21 | 3.8 | 125 | |
| 14 | 68/43 | 0.24 | 0.18 | 5.0 | 118 | |
| 15 | 70/61 | 0.29 | 0.17 | 5.4 | 120 | |

The soft shrink films according to the present invention are suitable for packaging articles that can be deformed when a film with a too high a shrink force particularly in the transverse direction is employed.

As an example a typical application of the heat-shrinkable films of the present invention is in the modified atmosphere packaging (MAP) of products placed in a tray or on a flexible support member. In this packaging system, also called flowpack, the product in the tray is wrapped into a film envelope made around the product, typically under a suitable and predetermined atmosphere. To create the envelope the flat film is first folded around a former and longitudinally sealed to form a tube. The tray with the product is placed in such a tube where the leading edge has been closed and gas flushed with the suitably selected gas or gas mixture. The excess gas is typically removed by a gentle pressure on top of the package and the open end of the envelope is then sealed and the package separated from the tubing. The loose package is then passed into a shrink tunnel, typically a hot air one set at a temperature suitable for shrinking such as a temperature of 120-150 °C, to get shrinkage of the film and thus a tight package. Under these conditions it is very important that the packaging film have a low shrink force at least in the transverse direction as a too high shrink force will lead to a more-or-less severe distortion of the tray that in any case would impair the appearance of the end package. Such a low shrink force is required in at least the transverse direction because it is particularly in the transverse direction that the excess material is limited and controlled by the size of the former, while in the longitudinal direction the two transverse seals closing the envelope can be made at a suitably selected distance from the tray edges. Furthermore the long sides of a tray are more susceptible to deformation than the short ones.

A similar application for the films of the present invention is in the MAP packaging of products, like for instance pizza, where the product itself, e.g., in this case the pizza base, acts as the package support and where it is the product itself that may be distorted if films with a too high shrink force are employed in the flowpack process.

Another packaging process where a heat-shrinkable film with a controlled shrink force in the transverse direction is desired is the lidding process of thermoformed or pre-made trays. In this case the tray with the product loaded therein is brought into a lid sealing station, which comprises a lower chamber and an upper chamber, and a web of the film of the invention is provided over the top of the tray. The lower chamber and the upper chamber are then closed together, air in-between the tray and the lidding film is replaced by the suitable gas or gas blend, with or without prior evacuation of said space, and then the lidding film is sealed to the rim or the peripheral lip of the tray by means of the combination of a heated frame or platen above the lidding film and a similarly framed anvil supporting the tray rim or peripheral lip, that are pressed together. The lidding film is cut almost at the same time as the lid is sealed and shrinkage of the lid in the package typically occurs at the same time as the heat of the sealing elements in the lidding station is sufficient to get the desired shrinkage.

The gas-barrier film according to the present invention may also be suitably employed, in combination with a suitable heat-sealable oxygen permeable film, In the tray lidding process for meat packaging described in EP-B-690012 or in WO 2006/87125 where a twin lidding film composed of an innermost oxygen permeable film and of an outermost gas-barrier film is used to close a high oxygen content meat package by heat-sealing said twin lidding film to the tray rim so as to bind a confined volume within the package containing at least an amount of oxygen effective to inhibit discoloration of the meat.

It is thus a further specific object of the present invention the use of the film according to the first aspect in a flowpack packaging process on a HFFS machine or in a tray lidding process where the film is used singly or in combination with an innermost gas-permeable lidding film.

It is finally a further specific object of the present invention a flowpack package or a tray-lidded package which comprises a film according to the first aspect as the wrapping film or as the lidding film or a component of the lidding system.

## Claims

1. A coextruded annealed heat-shrinkable packaging film comprising a core layer (A) comprising an ethylene/vinyl alcohol copolymer, a first outer polyolefin layer (B), a second outer polyolefin layer (C), and at least one inner layer (D) of a copolymer of propylene with butene and optionally also with ethylene, said film being **characterized by** a maximum shrink force in the transverse direction < 0.35 N/cm and by a % free shrink at 120°C of at least 20% in at least one direction.

2. The film of claim 1 wherein the copolymer of propylene of the at least one inner layer (D) is a copolymer propylene-butene or a propylene-butene-ethylene or propylene-ethylene-butene.

3. The film of claim 1 wherein said at least one inner layer (D) of a copolymer of propylene with butene comprises the propylene copolymer in amount of at least about 60 %, preferably at least 70 %, more preferably between 80 and 90 %, still more preferably of about 85% of layer (D) while the complement to 100 % is an ethylene copolymer.

4. The film of any of the preceding claims wherein the film also comprises one or two tie layers (E) directly adhered to one or both surfaces of the core layer (A).

5. The film of any of the preceding claims that is **characterized by** a maximum shrink force in the transverse direction $\leq$ 0.34 N/cm, preferably $\leq$ 0.33 N/cm.

6. The film of any of the preceding claims further **characterized by** a residual shrink force not less than 0.08 N/cm but not higher than 0.30 N/cm, preferably comprised between 0.10 N/cm and 0.28 N/cm, more preferably comprised between 0.11 and 0.22 N/cm

7. The film of any of the preceding claims **characterized by** any of the following layer sequences : (B)/(D)/(E)/(A)/(E)/(D)/(C), (B)/(E)/(A)/(E)/(D)/(E)/(C), (B)/(D)/(E)/(A)/(E)/(D)/(E)/(C), (B)/(E)/(D)/(E)/(A)/(E)/(D)/(C), or (B)/(E)/(D)/(E)/(A)/(E)/(D)/(E)/(C).

8. The film of any of the preceding claims wherein the polyolefins for the first outer layer (B) and for the second outer layer (C) are independently selected from the group consisting of ethylene homopolymers, ethylene co-polymers, propylene homopolymers, propylene co-polymers and blends thereof.

9. The film of claim 8 wherein the polyolefins for the first outer layer (B) are selected from the group consisting of ethylene homo-polymers, heterogeneous or homogeneous ethylene-$\alpha$-olefin copolymers, ethylene-cyclic olefin co-polymers, ethylene-vinyl acetate co-polymers, ethylene-($C_1$-$C_4$) alkyl acrylate or methacrylate co-polymers, ethylene-acrylic acid co-polymers, ethylene-methacrylic acid co-polymers, ionomers, polypropylene, propylene-ethylene co-polymers, propylene-ethylene-($C_4$-$C_{10}$)- $\alpha$ -olefin co-polymers, propylene-($C_4$-$C_{10}$)- $\alpha$ -olefin-ethylene copolymers and blends thereof in any proportion.

10. The film of any of the preceding claims wherein the first outer layer (B) and the second outer layer (C) have the same polymer composition.

11. A process for the manufacture of a film of claims 1 to 10 which process comprises coextruding the resins or the blends of resins of the various layers through a coextrusion die, quenching the primary tape thus obtained, re-heating it at the solid state orientation temperature comprised between 110 and 125°C, stretching it either mono-axially or bi-axially, submitting the oriented film to a heat treatment at a temperature of from 70 to 90 °C for a time of at least 0.5 and not more than 5 s sufficient to induce a decrease of its maximum shrink force in the transverse direction to a value not exceeding 0.35 N/cm, and finally cooling the annealed film down to room temperature.

12. The process of claim 11 wherein the quenched primary tape is irradiated with high energy electrons before being stretched.

13. Use of a film according to any of preceding claims 1 to 10 in a flowpack packaging process on a HFFS machine or in a tray lidding process where the film is used singly or in combination with an innermost gas-permeable lidding film.

14. A flowpack or a tray lidding packaging process where the packaging film of any of preceding claim 1 to 10 is used.

15. A flowpack package or a tray-lidded package which comprises a film according to any of previous claims 1 to 10 as the wrapping film or as the lidding film or as a component of the lidding system.


**Patentansprüche**

1. Koextrudierte getemperte aufschrumpfbare Verpackungsfolie, umfassend eine Kernschicht (A) umfassend ein Ethylen/Vinylalkohol-Copolymer, eine erste äußere Polyolefinschicht (B), eine zweite äußere Polyolefinschicht (C) und wenigstens eine innere Schicht (D) eines Copolymers von Propylen mit Buten und wahlweise auch mit Ethylen, wobei die Folie durch eine maximale Schrumpfkraft in Querrichtung ≤ 0,35 N/cm und durch ein Freischrumpfungsverhältnis bei 120 °C von wenigstens 20 % in wenigstens einer Richtung gekennzeichnet ist.

2. Folie nach Anspruch 1, wobei das Copolymer von Propylen der wenigstens einen inneren Schicht (D) ein Copolymer Propylen-Buten oder ein Propylen-buten-Ethylen oder Propylene-Ethylen-Buten ist.

3. Folie nach Anspruch 1, wobei die wenigstens eine innere Schicht (D) eines Copolymer von Propylen mit Butene das Propylen-Copolymer in einer Menge von wenigstens etwa 60 %, vorzugsweise wenigstens 70 %, mehrbevorzugt zwischen 80 und 90 %, noch mehr bevorzugt von etwa 85 % der Schicht (D) umfasst, während die Ergänzung auf 100 % ein Ethylen-Copolymer ist.

4. Folie nach einem der vorangehenden Ansprüche, wobei die Folie außerdem eine oder zwei Verbindungsschichten (E) unmittelbar an einer oder beiden Flächen der Kernschicht (A) anhaftet.

5. Folie nach einem der vorangehenden Ansprüche, die durch eine maximale Schrumpfkraft in Querrichtung ≤ 0,34 N/cm, vorzugsweise ≤ 0,33 N/cm gekennzeichnet ist.

6. Folie nach einem der vorangehenden Ansprüche, ferner **gekennzeichnet durch** eine Restschrumpfkraft von nicht weniger als 0,08 N/cm, aber nicht mehr als 0,30 N/cm, vorzugsweise zwischen 0,10 N/cm und 0,28 N/cm, mehr bevorzugt zwischen 0,11 und 0,22 N/cm.

7. Folie nach einem der vorangehenden Ansprüche, **gekennzeichnet durch** eine beliebige der folgenden Schichtfolgen: (B)/(D)/(E)/(A)/(E)/(D)/(C), (B)/(E)/(A)/(E)/(D)/(E)/(C), (B)/(D)/(E)/(A)/(E)/(D)/(E)/(C), (B)/(E)/(D)/(E)/(A)/(E)/(D)/(C) oder (B)/(E)/(D)/(E)/(A)/(E)/(D)/(E)/(C).

8. Folie nach einem der vorangehenden Ansprüche, wobei die Polyolefine für die erste äußere Schicht (B) und für die zweite äußere Schicht (C) unabhängig aus der Gruppe bestehend aus Ethylen-Homopolymeren, Ethylen-Copolymeren, Propylen-Homopolymeren, Propylen-Copolymeren und Mischungen davon ausgewählt werden.

9. Folie nach Anspruch 8, wobei die Polyolefine für die erste äußere Schicht (B) ausgewählt werden aus der Gruppe bestehend aus Ethylen-Homopolymeren, heterogenen oder homogenen Ethylen-a-Olefin-Copolymeren, zyklischen Ethylen-Olefin-Copolymeren, Ethylen-Vinylacetat-Copolymeren, Ethylen-($C_1$-$C_4$)-Alkylacrylat oder Methacrylat-Copolymeren, Ethylen-Acrylsäure-Copolymeren, Ethylen-Methacrylsäure-Copolymeren, Ionomeren, Polypropylen, Propylen-Ethylen-Copolymeren, Propylen-Ethylen-($C_4$-$C_{10}$)-$\alpha$-Olefin-Copolymeren, Propylen-($C_4$-$C_{10}$)-$\alpha$-Olefin-Ethylen-Copolymeren und Mischungen davon in beliebigen Anteilsverhältnissen.

10. Folie nach einem der vorangehenden Ansprüche, wobei die erste äußere Schicht (B) und die zweite äußere Schicht (C) die gleiche Polymerzusammensetzung aufweisen.

11. Verfahren zum Herstellen einer Folie nach den Ansprüchen 1 bis 10, wobei das Verfahren das Koextrudieren der Kunstharze oder der Mischungen von Kunstharzen der verschiedenen Schichten durch eine Koextrusionsdüse, Abschrecken des derart erlangten Primärbands, erneutes Erwärmen desselben in einer Festkörperorientierungstemperatur zwischen 110 und 125 °C, entweder monoaxiales oder biaxiales Dehnen derselben, Unterziehen der orientierten Folie einer Wärmebehandlung bei einer Temperatur von 70 bis 90 °C für eine Zeit von wenigstens 0,5 und nicht mehr als 5 s, die ausreichend ist, um eine Senkung der maximalen Schrumpfkraft in Querrichtung auf einen Wert bewirkt, der 0,35 N/cm nicht übersteigt, und schließlich Abkühlen der getemperten Folie auf Raumtemperatur.

12. Verfahren nach Anspruch 11, wobei das abgeschreckte Primärband mit hochenergetischen Elektronen bestrahlt wird, bevor es gedehnt wird.

13. Verwendung einer Folie nach einem der vorangehenden Ansprüche 1 bis 10 in einem Flowpack-Verpackungsverfahren an einer HFFS-Maschine oder in einem Schalendeckelungsverfahren, wobei die Folie einzeln oder in Kombination mit einer innersten gasdurchlässigen Deckelungsfolie verwendet wird.

14. Flowpack- oder Schalendeckelungsverfahren, in dem die Verpackungsfolie nach einem der vorangehenden Ansprüche 1 bis 10 verwendet wird.

15. Flowpack- oder Schalendeckelungsverfahren, das eine Folie nach einem der vorangehenden Ansprüche 1 bis 10 als die Einwickelfolie oder als die Deckelungsfolie oder als eine Komponente des Deckelungssystems umfasst.

**Revendications**

1. Film d'emballage thermorétractable recuit et co-extrudé comprenant une couche centrale (A) comprenant un copolymère éthylène/alcool vinylique, une première couche extérieure de polyoléfine (B), une deuxième couche extérieure de polyoléfine (C) et au moins une couche intérieure (D) d'un copolymère de propylène avec du butène et facultativement aussi avec de l'éthylène, ledit film étant **caractérisé par** une force de rétraction maximale dans la direction transversale ≤ 0,35 N/cm et par un pourcentage de rétraction libre à 120°C d'au moins 20% dans au moins une direction.

2. Film selon la revendication 1 dans lequel le copolymère de propylène de l'au moins une couche intérieure (D) est un copolymère de propylène-butène ou un propylène-butène-éthylène ou un propylène-éthylène-butène.

3. Film selon la revendication 1 dans lequel ladite au moins une couche intérieure (D) d'un copolymère de propylène avec du butène comprend le copolymère de propylène dans une quantité au moins d'environ 60 %, de préférence au moins 70 %, de manière plus préférable entre 80 et 90 % et de manière encore plus préférable d'environ 85% de couche (D) alors que le complément à 100 % est un copolymère d'éthylène.

4. Film selon l'une quelconque des revendications précédentes, le film comprenant aussi une ou deux couches de liaison (E) adhérant directement à la surface ou aux deux surfaces de la couche centrale (A).

5. Film selon l'une quelconque des revendications précédentes, qui est **caractérisé par** une force de rétraction maximale dans la direction transversale ≤ 0,34 N/cm, de préférence ≤ 0,33 N/cm.

6. Film selon l'une quelconque des revendications précédentes **caractérisé en outre par** une force de rétraction résiduelle supérieure ou égale à 0,08 N/cm mais pas supérieure à 0,30 N/cm, de préférence comprise entre 0,10 N/cm et 0,28 N/cm et de manière plus préférable comprise entre 0,11 et 0,22 N/cm.

7. Film selon l'une quelconque des revendications précédentes **caractérisé par** l'une quelconque des séquences de couches suivantes : (B)/(D)/(E)/(A)/(E)/(D)/(C), (B)/(E)/(A)/(E)/(D)/(E)/(C), (B)/(D)/(E)/(A)/(E)/(D)/(E)/(C), (B)/(E)/(D)/(E)/(A)/(E)/(D)/(C), ou (B)/(E)/(D)/(E)/(A)/(E)/(D)/(E)/(C).

8. Film selon l'une quelconque des revendications précédentes dans lequel les polyoléfines pour la première couche extérieure (B) et pour la deuxième couche extérieure (C) sont sélectionnées indépendamment dans le groupe constitué d'homopolymères d'éthylène, de copolymères d'éthylène, d'homopolymères de propylène, de copolymères de propylène et de leurs mélanges.

9. Film selon la revendication 8 dans lequel les polyoléfines pour la première couche extérieure (B) sont sélectionnées dans le groupe constitué d'homopolymères d'éthylène, de copolymères hétérogènes ou homogènes d'éthylène-$\alpha$-oléfine, de copolymères éthylène-oléfine cyclique, de copolymères éthylène-acétate de vinyle, de copolymères éthylène-($C_1$-$C_4$) acrylate d'alkyle ou méthacrylate, de copolymères éthylène-acide acrylique, de copolymères éthylène-acide méthacrylique, d'ionomères, de polypropylène, de copolymères de propylène-éthylène, de copolymères de propylène-éthylène-($C_4$-$C_{10}$)-$\alpha$-oléfine, de copolymères de propylène-($C_4$-$C_{10}$)-$\alpha$-oléfine-éthylène et de leurs mélanges dans n'importe quelle proportion.

10. Film selon l'une quelconque des revendications précédentes dans lequel la première couche extérieure (B) et la deuxième couche extérieure (C) présentent la même composition polymère.

11. Processus de fabrication d'un film selon les revendications 1 à 10, ledit processus consistant à co-extruder des résines ou des mélanges de résines des diverses couches à travers une filière de co-extrusion, à tremper la bande primaire ainsi obtenue, à la chauffer à nouveau à la température d'orientation à l'état solide comprise entre 110 et 125°C, à l'étendre monoaxialement ou biaxialement, à soumettre le film orienté à un traitement thermique à une température comprise entre 70 et 90 °C pendant une durée minimum de 0,5 s et maximum de 5 s suffisante pour induire une diminution de sa force de rétraction maximale dans la direction transversale à une valeur ne dépassant pas 0,35 N/cm, puis à refroidir le film recuit à température ambiante.

12. Processus selon la revendication 11 dans lequel la bande primaire trempée est irradiée avec des électrons à haute énergie avant d'être étendue.

13. Utilisation d'un film selon l'une quelconque des revendications précédentes 1 à 10 dans un processus d'emballage Flowpack sur une formeuse-ensacheuse-scelleuse horizontale ou dans un procédé d'operculage de plateau où le film est utilisé seul ou en association avec un film d'operculage interne perméable aux gaz.

14. Processus d'emballage Flowpack ou procédé d'operculage de plateau dans lequel on utilise le film d'emballage selon l'une quelconque des revendications précédentes 1 à 10.

15. Emballage Flowpack ou emballage à plateau operculé qui comprend un film selon l'une quelconque des revendications précédentes 1 à 10 en tant que film d'emballage ou en tant que film d'operculage ou en tant qu'élément du système d'operculage.

FIG. 1

Fig. 2

**REFERENCES CITED IN THE DESCRIPTION**

**Patent documents cited in the description**

- EP 1563990 A
- EP 797507 A
- WO 0037253 A
- EP 690012 B
- WO 200687125 A